**Europäisches Patentamt**

**European Patent Office**

**Office européen des brevets**

(11) Publication number : **0 397 636 B1**

# EUROPEAN PATENT SPECIFICATION

(45) Date of publication of patent specification :
**04.08.93 Bulletin 93/31**

(51) Int. Cl.⁵ : **G01D 5/26**

(21) Application number : **90870066.9**

(22) Date of filing : **10.05.90**

(54) **Device and procedure for measuring with optical fibre sensors, and sensor utilised therewith.**

(30) Priority : **11.05.89 BE 8900510**

(43) Date of publication of application :
**14.11.90 Bulletin 90/46**

(45) Publication of the grant of the patent :
**04.08.93 Bulletin 93/31**

(84) Designated Contracting States :
**BE DE ES FR GB IT NL**

(56) References cited :
**EP-A- 0 261 834
WO-A- 88/04065
GB-A- 2 192 984
APPLIED OPTICS. vol. 28, no. 7, 01 April 1989,
NEW YORK US pages 1289 - 1297; DER-TSAIR
JONG ET AL: "FREQUENCY DIVISION MULTI-
PLEXING OF OPTICAL FIBER SENSORS US-
ING AN OPTICAL DELAY LOOP WITH A
FREQUENCY SHIFTER"
LASER FOCUS. vol. 21, no. 10, October 1985,
TULSA US pages 142 - 146; J.D.C. JONES ET
AL: "RESEARCH ADVANCES IN FIBEROPTIC
INTERFEROMETRIC AND POLARIMETRIC
SENSORS"**

(56) References cited :
**TECHNISCHES MESSEN TM. vol. 51, no. 6,
June 1984, MUNCHEN DE pages 205 - 212;
R.KIST: "MESSWERTERFASSUNG MIT
FASEROPTISCHEN SENSOREN"
ADVANCES IN INSTRUMENTATION. vol. 42,
no. 3, 1987, PITTSBURGH US pages 1219 -
1229; D.A. KROHN: "DISTRIBUTIVE FIBER
OPTIC SENSING SYSTEMS"**

(73) Proprietor : **"Studiecentrum voor
Kernenergie", "S.C.K."
Seny Park Charles Lemairestraat 1
B-1160 Brussel (BE)**

(72) Inventor : **Voet, Marc
Ispralaan 75
B-2400 Mol (BE)**
Inventor : **Barel, Alain
Eugène Demonderlaan 52
B-1030 Brussel (BE)**
Inventor : **Sevenhans, Daniel
Sint Lievenslaan 17
B-9000 Gent (BE)**

(74) Representative : **Debrabandere, René
Bureau De Rycker nv Arenbergstraat 13
B-2000 Antwerpen (BE)**

## Description

The invention relates to a measuring device with optical fibre sensors for measuring physical parameters, which device has a branched structure with a main optical fibre cable and a number of branches therefrom, at the extremity of each branch an optical fibre sensor of the amplitude modulation type, a transmitter unit for the transmission of optical signals to the sensors and a control unit for processing the optical signals received back from the sensors, which sensors are located at different distances from at least one of these units so that the signals which the control unit receives back from the sensors are received with various delays and are in this manner to be distinguished.

A measuring device of this type is disclosed in "Advances in instrumentation" vol. 42, part 3, 19 7 (Research Triangle Park, NC,US) D.A. Krohn :"Distributive fiber optic sensing systems", pages 1219-1230. A light pulse is transmitted over a main optical fibre cable and the various branches thereof towards the various optical sensors which are arranged in the vicinity at different distances from each other. These sensors are reflective or transmissive sensors. The outgoing signal, this is the reflected signal in the first case and the signal allowed through in the second case is modulated in amplitude in function of a physical parameter, for example a pressure or a temperature. The pulses transmitted back arrive as a train with various delays and different amplitudes into the control unit which for example translates these signals through a photodetector into electric signals which are then demultiplexed.

These measuring devices offer, as for that matter do all measuring devices with optical fibre sensors compared to the non-optical measuring devices, the advantage of a reduced wiring, the exclusion of electromagnetic interferences, explosion safety, great sensitivity, light weight and possibilities of adaptation to special sensor types. Further they need no local source of supply and they give no electromagnetical radiation.

In general the above mentioned measuring device which only operates on the principle of time division or wavelength division multiplexing also requires relatively expensive electronics. e.g. an optical time field reflectometer. Further with these known measuring devices it is difficult to exclude line errors.

The purpose of this invention is to remedy this disadvantage and to provide a measuring device with optical fibre sensors which is relatively inexpensive and with which easy measuring errors resulting from defects in the optical cables or the influencing of these cables can be avoided.

For this purpose the transmitter unit has an amplitude modulation frequency division multiplexing device so that the signal transmitted to the sensors is multifrequent amplitude modulated and the signals received back by the control unit are modulated by the transmitter unit and by the sensor, while the control unit contains means in order to isolate the amplitude modulation originating from each sensor with its own delay through the presence of several amplitude modulations each different in frequence, and means for demodulating the latter mentioned signals.

Frequency division multiplexing of optical fiber sensors is known as such from "Applied Optics" vol. 28, no 7, 1 April 1984, NEW YORK US, pages 1289-1297; Der-Tsair Jong et al; "Frequency division multiplexing of optical fiber sensors using an optical delay loop with a frequency shifter". This method is however based on an interferometric method and the source must be a laser. The topology of the network also requires a closed loop. An expensive spectrum analyzer is used for signal processing.

Also EP-A-0 261 834 mentions frequency-multiplexing of optical fiber sensors, but this method is based on pulses with linear ramp modulated frequency. The frequency modulation presents a saw-tooth waveform. The phase delayed signals received back from the sensors are mixed with the original not delayed signal. The sensors must also all be mounted in closed loops.

In a particular embodiment of the invention each sensor contains an actual sensor element, a reference sensor element and a coupler which splits up the incoming signals over the two sensor elements, whereby the two sensor elements have different lengths and transmit back the signals with different delays to the control unit.

Of the utmost importance in the transmitter unit of the control unit is the amplitude and the starting phase of the various frequency components which effect the amplitude modulation of the optical power.

For this purpose a special procedure is provided in order to guarantee the linear field of the light source (LED or laser transmitter diode) through an optimisation (minimisation) of the CREST factor, this is optimise the signal-to-noise ratio. In the control unit means must then also be present in order to take into account this special modulation state (amplitude and phase) including alteration thereof in order to take into account the CREST factor in the receiving circuits.

In a preferably applied embodiment of the invention, the device contains several branched structures, each connected to a control unit and all these control units are themselves connected to an optical fibre ring architecture.

The invention also relates to a process for measuring physical parameters with optical fibre sensors which are mounted on extremities of branches of a main optical fibre cable, according to which process optical fibre sensors of the amplitude modulation type are utilised and the signals which are received back with different delays because the sensors are located at different distances, are further processed.

The invention also has the purpose of providing a similar process which can be produced with a relatively inexpensive and simple device and still permits an accurate measurement.

For this purpose signals are transmitted to the sensors which through an amplitude modulation frequency division multiplexing device are multifrequent amplitude modulated, and the amplitude modulation of each sensor with its own delay is isolated by the presence of several amplitude modulations, each different in frequency.

In a particular embodiment of the invention, sensors are utilised which have an actual sensor element and a reference sensor element with different lengths and the signals are transmitted back with different delays and the amplitude modulation of actual sensor elements as well as of reference sensor elements are isolated.

In an other particular embodiment of the process influences on the wiring or defects in the wiring are excluded by two measurements, either simultaneous, or successive, to be performed form the transmission coefficient in case of transmissive sensors or from the reflection coefficient in case of reflective sensors on the extremity of the branch to which a sensor connects with various amplitude modulated signals at different frequencies.

The invention will also appear from the following description of device and process for measuring with optical fibre sensors, and of a sensor utilised therewith. The reference numbers concern the drawings attached hereto in which:

Figure 1 represents a block diagram of a measuring device with optical fibre sensors according to the invention;

figure 2 represents a more detailed block diagram of a control unit from figure 1,

figure 3 is a schematically maintained representation of a sensor from the measuring device from figure 1, and figure 4 is a schematically maintained representation analogue to that from figure 3 but relating to another embodiment of the sensor.

In the various figures the same reference numbers relate to the same elements.

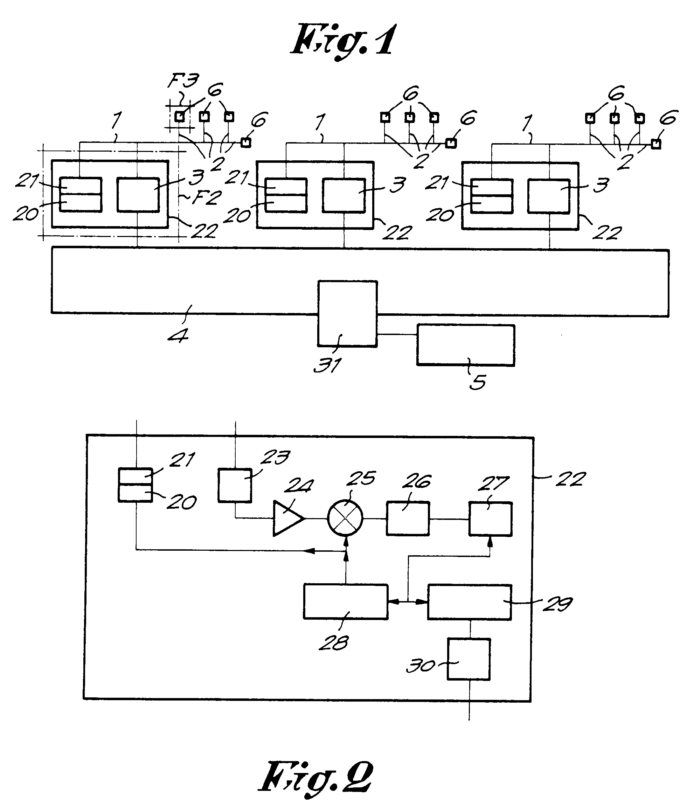

The measuring device according to figure 1 contains a number of branched structures 1, 2 which are connected in parallel to each other, each over a control unit 3 to an optical fibre ring architecture 4 to which a processing unit 5 is connected.

In figure 1 three branched structures 1, 2 are represented but it is evident that every other number is possible.

Each branched structure 1, 2 consists of a main optical fibre cable 1 and four branches 2. To the extremity of each branch an optical fibre pressure sensor of the amplitude modulation type 6 is connected.

The branched structures represented in figure 1 contain four branches 2 but it is clear that the structures can have another number of branches and can also have a different number each. To each branch a sensor 6 is also connected. The maximum number of sensors per structure is usually limited to eight.

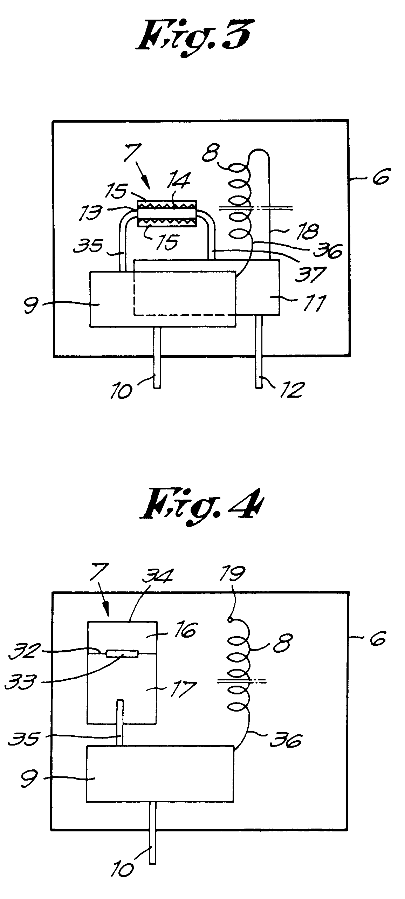

The sensors 6 are of the transmissive type. As especially appears from figure 3 each sensor contains an actual pressure sensitive sensor element 7, a reference sensor element 8, a first coupler 9 which splits up the optical signal that enters via the optical fibre 10 of a branch 2 via two fibres 35 and 36 over the two sensor elements 7 and 8, and a second coupler 11 which couples and transmits back by a second fibre 12 of the branch the optical signals allowed through from these sensor elements 7 and 8.

The sensor element 7 contains a so-called "micro-bending" transducer. The optical fibre 13 is surrounded by a casing 14 and arranged between two toothed plates 15 in this transducer. According to whether the pressure is greater or smaller the plates 15 will be strongly or less strongly pushed toward each other and cause more or less strong microbending of the covered fibre 13. Through this more or less light from the fibre 13 is dissipated in the casing 14. The amount of light allowed through, that goes via the fibre 37, the coupler 11 and the fibre 12 toward the control unit 3 is therefore a measure of the pressure.

The reference sensor element 8 consists of a long rolled up optical fibre of ten to thirty metres which with an extremity connects over the fibre 36 to the coupler 9 and with its other extremity over the fibre 18 to the coupler 11. The optical signal is transmitted in the form of a frequency division multiplex signal to the various sensors 6 of a branched structure 1, 2 by a transmitter unit 20, 21 which as represented in the figures 1 and 2, contains a not necessarily coherent light source and more especially an electrical optical transformer, for example a laser diode 21 and connected thereto a frequency division multiplexing device 20. This transmitter unit 20, 21 is mounted in the same housing 22 as the corresponding control unit 3.

As especially appears from figure 2 this control unit 3 contains an optical electrical transformer or detector 23 which receives and transforms the intensity modulated signals allowed through by the transmissive sensors 6. These signals are further amplified in the amplifier 24 and transmitted to the mixer 25 where the frequency modulated signals from the transmitter unit 20, 21 also arrive in order to be able to be compared with the signals received from the sensors 6. From there the electric signals are transmitted over a low-pass filter 26 to an analogue digital transformer 27. A synthesizer 28 transmits electric signals to the mixer 25 and to the electrical optical transformer or light source 21. A microprocessor 29 controls the synthesizer 28 and processes the signals of the analogue digital transformer 27.

The microprocessors 29 of the various control units 3 are in contact over an electrical optical transformer 30 with the optical fibre circuit 4.

All signals are finally transmitted via the optical electrical transformer 31 to the processing unit 5 or the work station that analyses the signals and which then shows and processes the pressures measured by the various sensors 6.

Through the fact that in each branched structure 1 the distance of the optical fibre cable between the transmitter unit 20, 21 and the control unit 3, on the one hand, and the various sensors 6, on the other hand, is different, the optical signals reflected by the sensors 6 also return with different delays to the control unit 3. Also the signals transmitted back from the reference sensor elements 8 have a delay in relation to the signals transmitted back from the corresponding actual sensor elements 7. Because of the fact that the optical signals transmitted by the transmitter units 20, 21 are modulated in frequency, the signals from the reference sensor elements 8 can be recognised.

With the above described device the sensors 6 are wiring insensitive. Influences on the measurement results of influences on the wiring or defects in the wiring can be excluded. It is sufficient for this purpose to perform two measurements, either simultaneous or successive, of the transmission coefficient at the extremity of a branch 2 to which a sensor 6 connects, with different amplitude modulated light signals at different frequencies f1 and f2. f1 can for example be 2 MHz and f2 3 MHz.

If R1 represents the transmission coefficient of the actual sensor element 7 to be measured and R2 the transmission coefficient of the reference sensor element 8, A the attenuation of the wiring fibre and T1 and T2 the duration times between the transmitter unit 20, 21 and these sensor elements 7 and 8, and L1 and L2 represent the lengths between the transmitter unit 20, 21 and respectively these sensor elements 7 and 8, then the two measurements M1 and M2 to be performed are to be expressed as follows:

$$M1(f1) = (AR1\ e^{-j2\pi f1T1} + AR2\ e^{-j2\pi f1T2})e^{-j2\pi f1t}$$
$$M2(f2) = (AR1\ e^{-j2\pi f2T1} + AR2\ e^{-j2\pi f2T2})e^{-j2\pi f2t}$$

Through synchronous detection or through spectral analysis via digitalisation and Fourier transformation the real part of the transmission coefficients RM1 and RM2 are obtained:

$$RM1 = AR1\ \cos 2\pi f1T1 + AR2\ \cos 2\pi f1T2$$
$$RM2 = AR1\ \cos 2\pi f2T1 + AR2\ \cos 2\pi f2T2$$

By making use of information regarding the lengths L1 and L2 which are equivalent to the delays T1 and T2, or by performing two redundant measurements at frequencies f3 and f4, the cosine terms are calculated and by matrix inversion or similar matrix treatment the unknown transmission coefficients AR1 and AR2 are determined.

With an alteration of the attenuation A of the wiring fibre, for example by ageing or defects, the measurements of the transmission coefficients AR1 and AR2 will alter proportionally. The transmission coefficient R1 of the actual sensor element 7 to be measured, obtained by dividing AR1 by AR2 is not altered by this so that the measurement of R1 remains correct.

If the transmission of the sensor element 7 is altered by the temperature this is also valid to the same degree for the transmission by the reference sensor element 8 so that in fact an autocalibration of the sensor 6 is obtained and the measurement of the temperature is independent.

The above described device not only permits the sensors 6 to be interrogated such that the sensors are wiring insensitive (line neutralities) but several sensors 6 can be united on the same fibre cable according to a branched structure 1 providing that they are naturally located at different distances from the transmitter unit 20, 21 and/or the control unit 3. The number of measurements to be performed increases proportionally with the number of sensors. The only limitation is imposed by the available optical power balance between the capacity of the transmitter and the NEP (noise equivalent power) of the detector and by the desired signal noise ratio; this means that the number of sensors can increase proportionally to the factor of the permitted decrease in the signal noise ratio which itself is a measure for the accuracy. The information from several series of sensors 6 and therefore from several branched structures can be optically transported over the ring architecture to the user.

The described device is relatively inexpensive and can be produced with relatively inexpensive and simple electronics. A very simple light source 21 can be used such as a laser diode or a CW (carrier wave) LED. The demultiplexing or disentangling of the returning signals from the sensors 6 can also occur in a simple manner through a synchronous detector or through digitalisation.

The sensors 6 need not necessarily be transmissive sensors. All amplitude modulated sensors are suitable to be implemented in the device, in which case then not the light signal allowed through but the reflected light signal is detected.

In figure 4 a similar reflective sensor 6 is represented. This sensor contains a pressure sensitive sensor element 7 that connects over a fibre 35 and a coupler 9 to the fibre 10 of a branch 2 and a reference sensor element 8 that as with the transmissive sensor is a rolled up fibre of five metres which connects with an extremity over a fibre 36 to the coupler 9 but with its other extremity does not connect to the second coupler but includes a reflecting surface 19, for example a metal terminal piece, on this extremity.

By reflective sensors the reflected signal is transmitted by the same fibre 10 over which the incoming signal was transmitted.

As appears from figure 4, the sensor element 7 contains two chambers 16 and 17 which are separated from each other by a membrane 32. In the membrane 32 a mirror element 33 is incorporated that is directed with its mirrored side into the chamber 17. Through the influence of the pressure in one of the two chambers 16 and 17 the mirror element 33 moves and the reflected light is as such modulated. Opposite this mirrored side the optical fibre 35 exits into the chamber 17. The fibre 35 and the coupler 9 serve both for the supply of the light signal and for the return transmission of the reflected light signal. With the use of reflective sensors 6 the reflection coefficients R1 are calculated in the same manner as described above in connection with a transmissive sensor but in the given formulas $2\pi f1T1$, $2\pi f1T2$, $2\pi f2T1$ and $2\pi f2T2$ must be replaced by respectively $4\pi f1T1$, $4\pi f1T2$, $4\pi f2T1$ and $4\pi f2T2$.

The invention is in no way restricted to the embodiments described above, and within the scope of the claims many changes can be applied to the described embodiments, among others regarding the form, the construction, the arrangement and the number of the parts which are used in implementing the invention.

In particular the sensors need not necessarily be of the construction described above. Other types of sensors can also be utilised which give a variant of the light amplitude in function of a variation of a pressure.

The sensor element can in itself be transmissive but can be made reflective by placing a reflecting element in the outgoing fibre. For that matter this is also valid for the reference sensor element.

For that matter the sensors need not necessarily be pressure sensors. They can also be sensitive to other physical parameters such as temperature.

The change in light amplitude can for example be the result of micro-bending, of change in refractive index etc.

**Claims**

1. Measuring device with optical fibre sensors (6) for the measurement of physical parameters, which device contains a branched structure (1, 2) with a main optical fibre cable (1) and a number of branches (2) therefrom, at the extremity of each branch (2) with an optical fibre sensor (6) of the amplitude modulation type, a transmitter unit (20, 21) for the transmission of optical signals to the sensors (6) and a control unit (3) for processing the optical signals received back from the sensors (6), which sensors (6) are located at different distances from at least one of these units (20, 21 and 3) so that the signals which the control unit (3) receives back from the sensors (6) are received with various delays and are in this manner to be distinguished, characterised in that the transmitter unit (20, 21) has an amplitude modulation frequency division multiplexing device (20) so that the signal transmitted to the sensors (6) is multifrequent amplitude modulated and the signals received back by the control unit (3) are modulated by the transmitter unit and by the sensor, while the control unit (3) contains means in order to isolate the amplitude modulation originating from each sensor (6) with its own delay through the presence of several amplitude modulations each different in frequence, and means for demodulating the latter mentioned signals.

2. Measuring device according to claim 1, characterised in that each sensor (6) contains an actual sensor element (7), a reference sensor element (8) and a coupler (9) which splits up the incoming signals over the two sensor elements (7 and 8) whereby the two sensor elements (7 and 8) have different lengths and transmit back the signals with different delays to the control unit (3).

3. Measuring device according to claim 2, characterised in that the sensors (6) are reflective sensors, each sensor (6) containing only one coupler (9) which splits up the incoming signals over the two sensor elements (7 and 8) and sends out the reflected signals over the same route as the incoming signals.

4. Measuring device according to claim 2, characterised in that the sensors (6) are transmissive sensors, each sensor (6) containing two couplers (9 and 11), a coupler (9) which splits up the incoming signals over the two sensor elements (7 and 8) and a second coupler (11) which sends out the signals allowed through, over the same optical fibre (12) but different from the fibre (10) of the incoming signals.

5. Measuring device according to either one of the claims 2 to 4, characterised in that the reference sensor element (8) contains an optical fibre of a certain length.

6. Measuring device according to either one of the claims 2 to 5, characterised in that the transmitter unit (20, 21) transmits signals with different frequency to the reference sensor element (8) and the actual sensor element (7) of a sensor (6).

7. Measuring device according to either one of the claims 2 to 6, characterised in that the control unit (3) contains means for comparing the signals, frequency modulated by the transmitter unit (20, 21) to those signals also modulated in intensity transmitted back by the actual sensor elements (7) with different delays, and to the signals transmitted back by the reference sensor elements (8) with delay in relation to the earlier signals and with various delays in relation to each other.

8. Measuring device according to either one of the claims 1 to 7, characterised in that it contains several branched structures (1, 2) connected to a control unit (3) and all these control units (3) are themselves connected over an electrical optical transformer (30) to an optical fibre ring architecture (4).

9. Method for the measurement of physical parameters with opitcal fibre sensors (6) which are mounted on the extremities of branches (2) of a main optical fibre cable (1), according to which method optical fibre sensors (6) of the amplitude modulation type are utilised and the signals which, because the sensors (6) are located at different distances, are received back with various delays are further processed, characterised in that signals are transmitted to the sensors (6) which are multifrequent amplitude modulated by an amplitude modulation frequency division multiplexing device (20), and the amplitude modulation of each sensor (6) is isolated with its own delay through the presence of several amplitude modulations, each different in frequency.

10. Method according to claim 9, characterised in that sensors (6) are utilised which have an actual sensor element (7) and a reference sensor element (8) with different lengths and the signals are transmitted back with different delays, and that the amplitude modulation (7) of the actual sensor elements as well as of the reference sensor elements (8) are isolated.

11. Method according to either one of claims 9 and 10 characterised in that influences on the wiring or defects in the wiring are excluded by two measurements, either simultaneous, or successive, to be performed of the transmission coefficient in case of transmissive sensors (6) or of the reflection coefficient in case of reflective sensors (6) on the extremity of the branch (2) to which a sensor (6) connects, with various frequencies.

**Patentansprüche**

1. Meßvorrichtung mit faseroptischen Sensoren (6) zum Messen physikalischer Parameter, welche eine verzweigte Struktur (1, 2) mit einem faseroptischen Hauptkabel (1) und einer Anzahl Verzweigungen (2) hiervon mit einem faseroptischen Sensor (6) des Typs Amplitudenmodulation am Ende jeder Verzweigung (2), eine Sendeeinheit (20, 21) für die Übertragung optischer Signale zu den Sensoren (6) sowie eine Kontrolleinheit (3) zum Verarbeiten der optischen Signale, die von den Sensoren (6) zurückempfangen werden, aufweist, wobei diese Sensoren (6) in verschiedenen Abständen zu wenigstens einer dieser Einheiten (20, 21 und 3) angebracht sind, so daß die Signale, die die Kontrolleinheit (3) von den Sensoren (6) zurückempfängt, mit unterschiedlichen Verzögerungen empfangen werden und auf diese Weise unterschieden werden können, dadurch gekennzeichnet, daß die Sendeeinheit (20, 21) über ein Amplitudenmodulations-Frequenzteilungsmultiplexgerät (20) verfügt, so daß das an die Sensoren (6) übertragene Signal multifrequent amplitudenmoduliert wird und die Signale, die von der Kontrolleinheit (3) zurückempfangen werden, von der Sendeeinheit und dem Sensor moduliert werden, während die Kontrolleinheit (3) Mittel beinhaltet, um die Amplitudenmodulation, die von jedem Sensor (6) mit seiner eigenen Verzögerung durch das Vorhandensein mehrerer Amplitudenmodulationen mit jeweils unterschiedlicher Frequenz stammt, zu isolieren, sowie Mittel zur Demodulation der zuletzt erwähnten Signale.

2. Meßvorrichtung gemäß Anspruch 1, dadurch gekennzeichnet, daß jeder Sensor (6) ein eigentliches Sensorelement (7), ein Referenzsensorelement (8) und einen Koppler (9) aufweist, der die eingehenden Signale über die beiden Sensorelemente (7 und 8) aufteilt, wobei die beiden Sensorelemente (7 und 8) unterschiedliche Langen haben und die Signale mit unterschiedlichen Verzögerungen an die Kontrolleinheit (3) zurückübertragen.

3. Meßvorrichtung gemäß Anspruch 2, dadurch gekennzeichnet, daß die Sensoren (6) reflektive Sensoren sind, wobei jeder Sensor (6) nur einen Koppler (9) umfaßt, der die eingehenden Signale über die beiden Sensorelemente (7 und 8) aufteilt und die reflektierten Signale über denselben Pfad aussendet wie die eingehenden Signale.

4. Meßvorrichtung gemäß Anspruch 2, dadurch gekennzeichnet, daß die Sensoren (6) transmissive Sensoren sind, wobei jeder Sensor (6) zwei Koppler (9 und 11) umfaßt, einen Koppler (9), der die eingehenden Signale über die beiden Sensorelemente (7 und 8) aufteilt, und einen zweiten Koppler (11), der die durchgelassenen Signale über dieselbe Optikfaser (12) aussendet, die sich jedoch von der Faser (10) der eingehenden Signale unterscheidet.

5. Meßvorrichtung gemäß einem der Ansprüche 2 bis 4, dadurch gekennzeichnet, daß das Referenzsensorelement (8) eine Optikfaser einer bestimmten Länge umfaßt.

6. Meßvorrichtung gemäß einem der Ansprüche 2 bis 5, dadurch gekennzeichnet, daß die Sendeeinheit (20, 21) Signale mit unterschiedlicher Frequenz zu dem Referenzsensorelement (8) und dem eigentlichen Sensorelement (7) eines Sensors (6) überträgt.

7. Meßvorrichtung gemäß einem der Ansprüche 2 bis 6, dadurch gekennzeichnet, daß die Kontrolleinheit (3) Mittel aufweist zum Vergleich der von der Sendeeinheit (20, 21) frequenzmodulierten Signale mit den ebenfalls von der Intensität her modulierten Signalen, die durch die eigentlichen Sensorelemente (7) mit verschiedenen Verzögerungen zurückübertragen werden, und mit den Signalen, die durch die Referenzsensorelemente (8) mit Verzögerung in Bezug auf die früheren Signale und mit unterschiedlichen Verzögerungen in Bezug zueinander zurückübertragen werden.

8. Meßvorrichtung gemäß einem der Ansprüche 1 bis 7, dadurch gekennzeichnet, daß sie mehrere verzweigte Strukturen (1, 2), die mit einer Kontrolleinheit (3) verbunden sind, aufweist, und daß all diese Kontrolleinheiten (3) ihrerseits über einen elektrooptischen Wandler (30) mit einem faseroptischen Ringaufbau (4) verbunden sind.

9. Verfahren zur Messung physikalischer Parameter mit faseroptischen Sensoren (6), die an den Enden von Verzweigungen (2) eines faseroptischen Hauptkabels (1) montiert sind, gemäß welchem Verfahren faseroptische Sensoren (6) des Typs Amplitudenmodulation verwendet werden und die Signale, die, da die Sensoren (6) in unterschiedlichen Abständen angebracht sind, mit unterschiedlichen Verzögerungen zurückempfangen werden, weiterverarbeitet werden, dadurch gekennzeichnet, daß Signale, die durch ein Amplitudenmodulations-Freqenzteilungs-Multiplexinggerät (20) multifrequent amplitudenmoduliert sind, zu den Sensoren (6) übertragen werden und die Amplitudenmodulation jedes Sensors (6) mit seiner eigenen Verzögerung durch das Vorhandensein mehrerer, von der Frequenz her unterschiedlicher Amplitudenmodulationen isoliert wird.

10. Verfahren gemäß Anspruch 9, dadurch gekennzeichnet, daß Sensoren (6) verwendet werden, die ein eigentliches Sensorelement (7) und ein Referenzsensorelement (8) mit unterschiedlichen Längen aufweisen, und die Signale mit unterschiedlichen Verzögerungen zurückübertragen werden, und daß die Amplitudenmodulation (7) der eigentlichen Sensorelemente wie auch der Referenzsensorelemente (8) isoliert werden.

11. Verfahren gemäß einem der Ansprüche 9 und 10, dadurch gekennzeichnet, daß Einflüsse auf die Verdrahtung oder Defekte in der Verdrahtung durch zwei entweder simultan oder aufeinanderfolgend mit unterschiedlichen Frequenzen auszuführende Messungen des Übertragungskoeffizienten im Falle transmissiver Sensoren (6) oder des Reflexionskoeffizienten im Falle reflektiver Sensoren (6) am Ende der Verzweigung (2), mit welchem ein Sensor (6) verbunden ist, ausgeschlossen werden.

**Revendications**

1. Dispositif de mesure équipé de détecteurs (6) à fibres optiques pour la mesure de paramètres physiques, ledit dispositif comportant une structure ramifiée (1, 2) munie d'un câble principal (1) à fibre optique et d'un certain nombre de branches (2) partant de ce dernier, un détecteur à fibre optique (6) du type à modulation d'amplitude étant disposé à l'extrémité de chaque branche (2), une unité transmettrice (20, 21) pour la transmission de signaux optiques aux détecteurs (6), ainsi qu'une unité de commande (3) pour traiter les signaux optiques reçus en retour depuis les détecteurs (6), lesdits détecteurs (6) étant disposés à des distances différentes par rapport à au moins une de ces unités (20, 21 et 3), si bien que les signaux que l'unité de commande (3) reçoit en retour depuis les détecteurs (6) sont reçus avec des retards variés et doivent être distingués de cette manière, caractérisé en ce que l'unité transmettrice (20, 21) possède un dispositif de multiplexage (20) par modulation d'amplitude/répartition en fréquences, si bien que le signal transmis aux détecteurs (6) est soumis à une modulation d'amplitude à plusieurs fréquences et les signaux reçus en retour par l'unité de commande (3) sont modulés par l'unité transmettrice et par le détecteur, tandis que l'unité de commande (3) contient un moyen destiné à isoler la modulation d'amplitude provenant de chaque détecteur (6) avec son propre retard par la présence de diverses modulations d'amplitude ayant chacune une fréquence différente, ainsi qu'un moyen pour démoduler les signaux mentionnés en dernier lieu.

2. Dispositif de mesure selon la revendication 1, caractérisé en ce que chaque détecteur (6) contient un élément détecteur proprement dit (7), un élément détecteur de référence (8) et un coupleur (9) qui répartit les signaux entrants entre les deux éléments détecteurs (7 et 8), les deux éléments détecteurs (7 et 8) possédant des longueurs différentes et transmettant les signaux en retour à l'unité de commande (3) avec des retards différents.

3. Dispositif de mesure selon la revendication 2, caractérisé en ce que les détecteurs (6) sont des détecteurs à réflexion, chaque détecteur (6) contenant un seul coupleur (9) qui répartit les signaux entrants entre les deux éléments détecteurs (7 et 8) et envoie les signaux réfléchis en suivant la même voie que celle suivie par les signaux entrants.

4. Dispositif de mesure selon la revendication 2, caractérisé en ce que les détecteurs (6) sont des détecteurs à transmission, chaque détecteur (6) contenant deux coupleurs (9 et 11), un coupleur (9) qui répartit les signaux entrants entre les deux éléments détecteurs (7 et 8) et un second coupleur (11) qui envoie les signaux autorisés, en passant par la même fibre optique (12), mais différente de la fibre (10) des signaux entrants.

5. Dispositif de mesure selon l'une quelconque des revendications 2 à 4, caractérisé en ce que l'élément détecteur de référence (8) contient une fibre optique d'une certaine longueur.

6. Dispositif de mesure selon l'une quelconque des revendications 2 à 5, caractérisé en ce que l'unité transmettrice (20, 21) transmet des signaux à des fréquences différentes à l'élément détecteur de référence (8) et à l'élément détecteur proprement dit (7) d'un détecteur (6).

7. Dispositif de mesure selon l'une quelconque des revendications 2 à 6, caractérisé en ce que l'unité de commande (3) contient un moyen pour comparer les signaux dont la fréquence a été modulée par l'unité transmettrice (20, 21), aux signaux dont l'intensité a également été modulée, transmis en retour par les éléments détecteurs (7) proprement dits avec différents retards, et aux signaux transmis en retour par les éléments détecteurs de référence (8) avec un retard par rapport aux signaux antérieurs et avec divers retards l'un par rapport à l'autre.

8. Dispositif de mesure selon l'une quelconque des revendications 1 à 7, caractérisé en ce qu'il contient plusieurs structures ramifiées (1, 2) reliées à une unité de commande (3), toutes ces unités de commande (3) étant elles-mêmes reliées par l'intermédiaire d'un transformateur électro-optique (30) à une architecture annulaire (4) à fibre optique.

9. Procédé pour la mesure de paramètres physiques à l'aide de détecteurs (6) à fibres optiques qui sont montés aux extrémités des branches (2) d'un câble principal (1) à fibre optique, procédé selon lequel on utilise des détecteurs (6) à fibres optiques du type à modulation d'amplitude et on traite ultérieurement les signaux qui, étant donné que les détecteurs (6) sont disposés à des distances différentes, sont reçus en retour avec divers retards, caractérisé en ce que les signaux sont transmis aux détecteurs (6) qui ont subi une modulation d'amplitude à plusieurs fréquences à l'intervention d'un dispositif de multiplexage (20) par modulation d'amplitude/répartition en fréquences, et la modulation d'amplitude de chaque détecteur (6) est isolée avec son propre retard par la présence de diverses modulations d'amplitudes ayant chacune une fréquence différente.

10. Procédé selon la revendication 9, caractérisé en ce qu'on utilise des détecteurs (6) qui possèdent un élément détecteur proprement dit (7) et un élément détecteur de référence (8) de longueurs différentes, les signaux étant transmis en retour avec différents retards, et en ce que la modulation d'amplitude (7) des éléments détecteurs proprement dits et celle des éléments détecteurs de référence (8) sont isolées.

11. Procédé selon l'une quelconque des revendications 9 et 10, caractérisé en ce qu'on exclut des influences s'exerçant sur le câblage ou encore des défauts dans le câblage à l'intervention de deux mesures que l'on doit effectuer, soit simultanément, soit successivement, du coefficient de transmission en cas de détecteurs (6) à transmission ou du coefficient de réflexion en cas de détecteurs à réflexion, à l'extrémité de la branche (2) à laquelle est relié un détecteur (6), à diverses fréquences.

*Fig.1*

*Fig.2*

# *Fig.3*

# *Fig.4*